# EUROPEAN PATENT SPECIFICATION

(11) **EP 0 898 537 B1**
(45) Date of publication and mention of the grant of the patent: **01.03.2000**
(21) Application number: 97923074.5
(22) Date of filing: 14.05.1997
(51) Int. Cl.: B62B 1/12, B62B 5/00

(54) **MULTI-PURPOSE SUPPORT STRUCTURE WITH AN EXTENDABLE HANDLE AND RETRACTABLE WHEELS**
MEHRZWECK TRAGSTRUKTUR MIT AUSZIEHBARER HANDHABE UND EINZIEHBAREN RÄDERN
DISPOSITIF DE SUPPORT A USAGES MULTIPLES POURVU D'UNE POIGNEE ESCAMOTABLE ET DE ROUES RETRACTABLES

(30) Priority: 15.05.1996 IT FI960112
(43) Date of publication of application: 03.03.1999
(73) Proprietor: Trassinelli, Duccio, 50022 - Greve di Chianti (Firenze) (IT)
(72) Inventor: Trassinelli, Duccio, 50022 - Greve di Chianti (Firenze) (IT)
(74) Representative: Piovesana, Paolo
(86) International application number: EP9702461
(87) International publication number: WO9743162

(56) References cited:
- FR-A- 2 239 876
- FR-A- 2 645 486
- US-A- 3 857 618
- US-A- 4 588 055
- US-A- 5 209 576
- US-A- 5 259 664

## Description

This invention relates to a multi-purpose support structure with an extendable handle and retractable wheels.

Wheel-containing structures used to support and transport loads of various types, such as rucksacks, suitcases, bags, books, child carriers, etc., are known. These structures generally pose various problems, related both to their use and to user's requirements. In particular, from starting school, students are often required to transport books and other large heavy scholastic objects to the extent of causing the student to assume a curved position during walking and running. There is hence a consequent risk of malformation, in particular of the spine, with possible negative consequences during that particular period of skeletral development.

Apart from school use, it is usual to transport for the most varied needs various types of bulky objects, rucksacks, suitcases, bags and child carriers, and it is well known that such transportation creates fundamental problems, such as their weight acting totally on the hands or back of the person carrying them, and variability in transportation, which can occur partly in an automobile, partly on foot, partly on a motor bus or other public vehicle, etc..

In seeking to provide an overall solution to the problem, various arrangements have been proposed, such as suitcases with wheels, foldable pushchairs, and foldable carrier trolleys. A suitcase with wheels is very difficult to transport, especially if the wheels are small. A foldable pushchair requires a complicated and difficult operation for its folding. A carrier trolley has the additional nuisance of difficult storage when not in use, and a certain laboriousness in opening the trolley and fixing to it the object to be transported.

US-A- 4 588 055 discloses a device for towing luggage incorporated into a wall of the luggage comprising a pair of fixed tubes, a pair of push-pull tubes and a U-shaped tube wherein each end of the U-shaped tubes is connected to the push-pull tubes.

An object of the invention is to provide a multi-purpose support structure which can be used in the most varied situations, and is of small overall size, is easily transformed and is totally adaptable to different applications.

This and further objects which will be apparent from the ensuing description are attained according to the invention by a multi-purpose support structure with an extendable handle and retractable wheels as described in claim 1.

Some preferred embodiments of the present invention are further described hereinafter, with reference to the accompanying drawings in which:

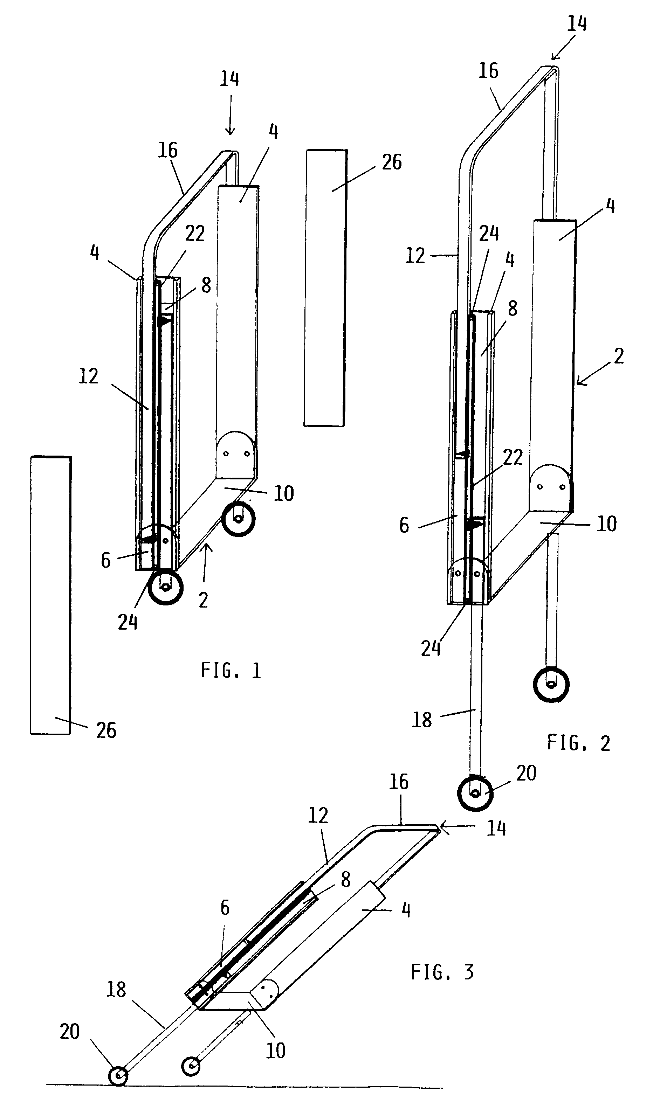

- Figure 1: is a partly exploded perspective view of a multi-purpose support structure of the invention in its retracted configuration;
- Figure 2: shows it in the same view as Figure 1 but in its extracted configuration;
- Figure 3: shows it is in its extracted and working configuration;
- Figure 4: shows it applied to a hand-carried rucksack;
- Figure 5: shows it applied to the same rucksack, but shoulder-carried;
- Figure 6: shows it applied to the same rucksack used as a trolley;
- Figure 7: shows it applied to a hand-carried child carrier;
- Figure 8: shows it applied to the same carrier. but shoulder-carried;
- Figure 9: shows it applied to the same carrier used as a pushchair;
- Figure 10: shows a different embodiment thereof in the same view as Figure 2;
- Figure 11: shows a third embodiment thereof in the same view as Figure 2;
- Figure 12: shows this third embodiment in the same view as Figure 3; and
- Figure 13: shows the particular of the lower end of the section bar elements.

As can be seen from the figures, the multi-purpose support structure according to the invention comprises an essentially U-shaped support frame 2, with two longitudinal section bar elements 4 each containing a pair of guide channels 6 and 8 and joined together by a transverse element 10.

In the corresponding guide channels 6 of the two longitudinal section bars 4 there are slidable two parallel arms 12 of a handle element 14 which, in addition to said arms 12, comprises a transverse connecting element 16, forming the handgrip for the user.

Two rods 18, each provided lowerly with a wheel 20, are slidingly housed in the other corresponding guide channels of the two longitudinal section bars 4.

With the aim of strenghtening the structure, the two rods 18 are connected each other with through a bar (not shown in the drawings).

Each rod 18 is connected to the corresponding arm 12, ie to that arm associated with the same longitudinal section bar 4 of the support frame 2, by a substantially non-extendable endless belt 22 passing taut about return rollers 24 applied to each section bar 4 and fixed at its two straight sides to the respective arm 12 of the handle element 14 and to the respective rod 18.

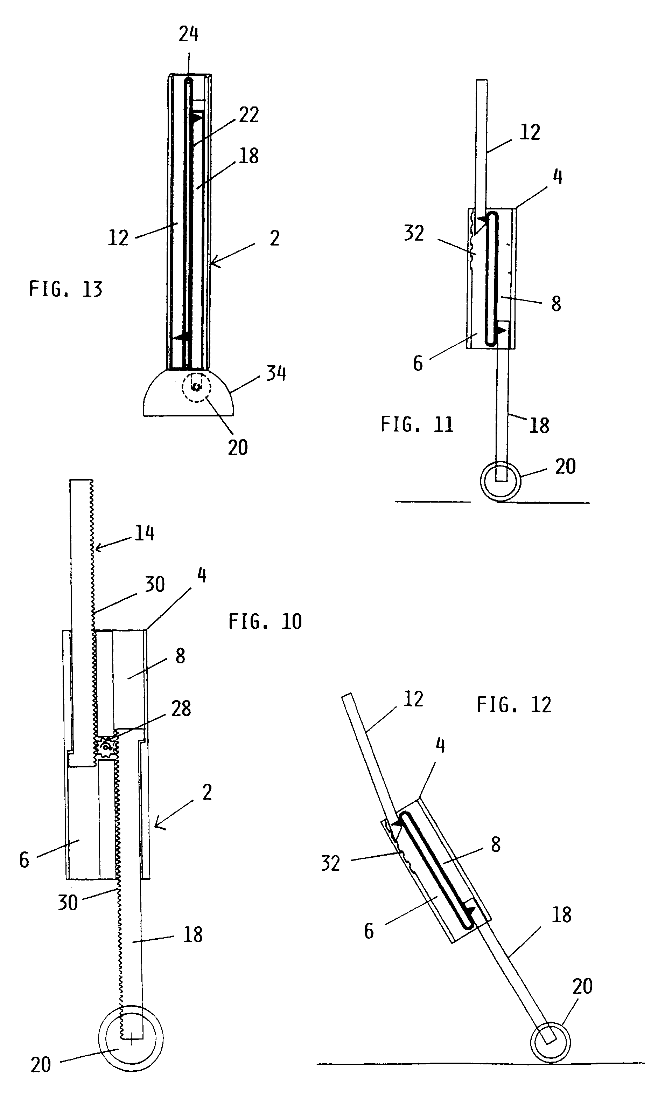

To each section bar 4, which for the reasons explained hereinafter has a length substantially equal to that of the arms 12 and of the rods 18, there can be applied a cover strip 26, which completely closes the guide channels 6 and 8, while enabling said arms 12 and said rods 18 to slide within them. Furthermore the lower end of each section bar 4 may be provided with a shell body 34 housing the wheels 20 in retracted configuration of the structure (see Figure 13).

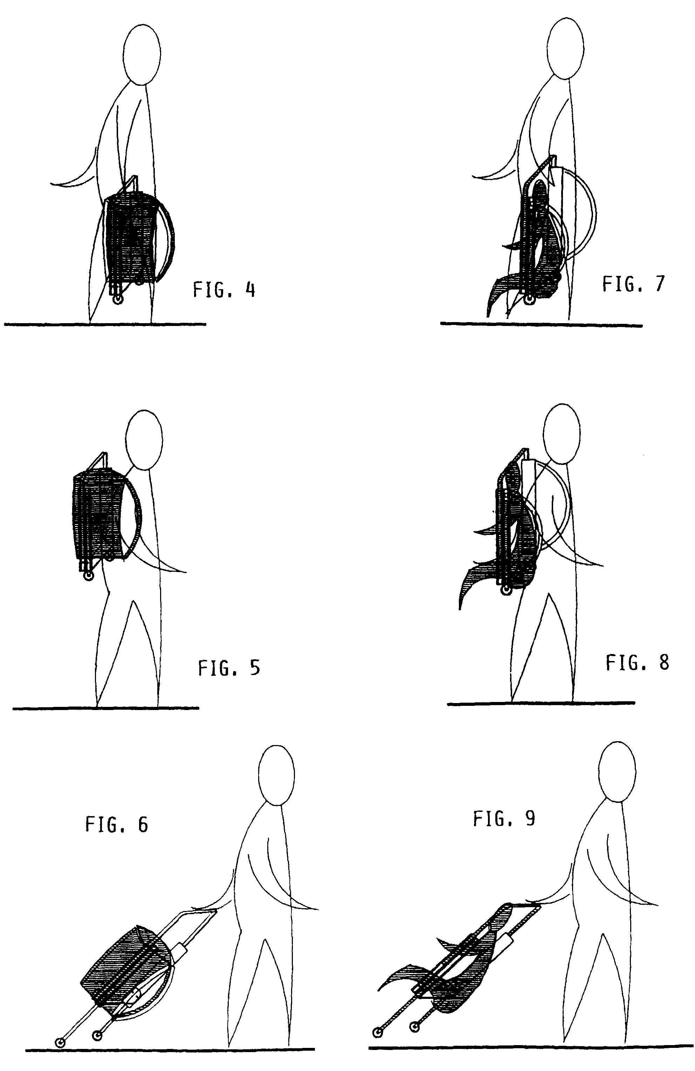

For a better understanding of the operation of the multi-purpose support according to the invention, reference will be made to its possible uses, for example applied to a rucksack (see Figures 4-6) or to a child carrier (see Figures 7-9). In both cases, the fixing can be by traditional straps or connectors which make it totally visible form the outside, or by insertion into appropriate interspaces provided in the rucksack or carrier, so as to be completely hidden from view except for the handgrip 16 of the handle element 14 and the wheels 20.

Due to the simple shape of the structure it is possible to provide it with mushroom shaped appendices engageable by rings foreseen in the rucksack or by applying to the same rucksack two foldable bands engageable with Velcro® strip.

On this bases, the operation of the multi-purpose support according to the invention is as follows:
when in the rest condition, the handle element 14 and the rods 18 are retracted into the support frame 2 and occupy only a small space. In this state the rucksack or carrier can be used conventionally, ie carried by hand via a handle with which it is generally provided (see Figures 4 and 7) or carried on the shoulders by a pair of straps, with which it is likewise provided (see Figures 5 and 8).

In this state, because the weight of the handle element 14 is greater than the weight of the rods 18 with their wheels 20, and because of their connection by the belts 22, their retracted state is maintained even in the case of inevitable knocks during transportation.

When the support is to be used as a trolley, the user, while maintaining the structure vertical, merely pulls the handle element 14 so that the weight of the support and the rucksack applied to it causes upward extraction of the handle element 14 and simultaneous downward extraction of the rods 18. This simultaneous opposite extraction is obviously limited by the points of fixing of said handle element 14 and said rods 18 to the belts 22, these points being chosen to prevent the arms 12 and rods 18 completely escaping from their respective guide channels 6,8.

Having achieved the desired extent of elongation, the support of the invention can be used as a trolley, maintained in a traditional inclined arrangement (see Figures 6 and 9) which, because of the weight of the assembly, exerts on the lateral walls of the guide channels 6,8 a transverse force which provides stability of the configuration attained. This stability can be accentuated by treating the lateral walls of the guide channels and/or the surface of the arms 12 and rods 18 to increase mutual sliding friction.

To return to the retracted state it is sufficient to again position the trolley vertically, so that the weight of the assembly provides retraction of the handle element 14 and rods 18.

In the embodiment shown in Figure 10, the simultaneous opposing movement of the handle element 14 and rods 18 is achieved no by belts, but by pinions 28 mounted idly at the centre of each section bar element 4 and simultaneously engaging corresponding toothed portions 30 provided on each arm 12 and on each rod 18.

As can be seen, stability of the support configuration according to the invention under any extent of elongation is provided by the friction existing between the elements 12,18 and the respective guide channels 6,8 due to the weight of the assembly. However this stability is increased by providing on the outer wall of the channels 6 a toothing 32 engagable by the point-shaped lower end of the arms 12, as shown in Figures 11 and 12.

Independently of the embodiments used, the multi-purpose support structure according to the present invention is especially advantageous, and in particular:
- it can be applied to a large number of objects, such as bags, sacks, rucksacks, suitcases, child carriers and parcels in general,
- it can be applied to the exterior of these objects by using straps, laces etc. or to their interior, in an interspace provided within them,
- it can be adjusted according to the user's height,
- it advantageously uses the weight of the assembly both to facilitate the operations involved in transforming the support, and to ensure its stability in any elongated configuration,
- it occupies little space when not in use,
- it enables to avoid any contact with the wheels, when the structure is in retracted condition, due to the presence of the shell shaped body 34,
- it avoids any touch of the belts with the ground due to the possibility of raising the rucksack,
- it allows to rest the rucksack on the back of the user due to the lacking of transverse element in the structure.

In the embodiments shown the section bars have been represented rectilinear as well as the arms and the rods, but they could be slightly curved with the concavity facing upward in extracted condition of the structure and this with a better stability.

## Claims

1. A multi-purpose support structure with an extendable handle and retractable wheels (20), including in combination:
- a support frame (2) with a pair of longitudinal uprights (4),
- a handle element (14), with two parallel sides (12) slidable within the uprights (4) and with a transverse connecting side (16) forming a gripping element,
characterised in that :
- each upright comprises first and second guide channels (6,8) extending parallel to each other side by side
- the parallel sides (12) of the handle element (14) are slidable within said first guide channel (6),
and in that it further comprises:
- a pair of rods (18) provided lowerly with the wheels (20) and slidable within said second guide channels (8), and
- means (22,28) for simultaneously and opposingly moving said parallel sides (12) of said handle element (14) and said rods (18) along their respective guide channels (6,8).

2. A support structure as claimed in claim 1, characterised in that the support frame (2) is essentially of U-shape with a lower cross-member (10) joining together the two longitudinal uprights (4).

3. A support structure as claimed in claim 1, characterised by comprising for each longitudinal upright (4) a cover element for the guide channels (6,8).

4. A support structure as claimed in claim 1, characterised in that each longitudinal upright (4) houses a substantially non-extendable endless flexible element (22) fixed to the corresponding side (12) of the handle element (14) and to the corresponding rod (18) to synchronize their opposing axial movements.

5. A support structure as claimed in claim 4 characterised in that the flexible element (22) passes through a pair of rollers (24).

6. A support structure as claimed in claim 1 characterised in that the rods (18) are connected to each other by means of a strenghtening bar.

7. A support structure as claimed in claim 1 characterised in that the lower end of each upright (4) is provided with a shell body (32) housing the wheels (20) in condition of retracted structure.

8. A support structure as claimed in claim 1, characterised in that to each longitudinal upright (4) there is applied a pinion (28) partly projecting into both the guide channels (6,8) and simultaneously engaging toothed portions (30) provided on the corresponding side (12) of the handle element (14) and on the corresponding rod (18) to synchronize their opposing axial movements.

9. A support structure as claimed in claim 1, characterised in that at least a part of the surface of each side (12) of the handle element (14) and of each rod (18) and/or at least a part of the surface of each guide channel (6,8) are treated to increase mutual sliding friction.

10. A support structure as claimed in claim 1, characterised in that the outer lateral wall of each guide channel (6) comprises a toothing (32) for engagement by the pointed and the corresponding side (12) of the handle element (14).

11. A support structure as claimed in claim 1, characterised in that the total weight of the handle element (14) is greater than the total weight of the two rods (18) with their respective wheels (20).

## Patentansprüche

1. Mehrzweck-Tragevorrichtung mit ausziehbarer Handhabe und einziehbaren Rädern (20), die in Kombination aufweist:
- einen Tragrahmen (2) mit einem Paar von in Längsrichtung verlaufenden Ständern(4),
- ein Handhabeelement (14) mit zwei parallelen Seiten (12), die in den Ständern (4) schiebbar sind, und mit einer quer verlaufenden Seite (16), welche ein Griffelement bildet,
dadurch gekennzeichnet, dass:
- jeder Ständer einen ersten und einen zweiten Führungskanal (6, 8) aufweist, welche Seite an Seite parallel zu einander verlaufen,
- die parallelen Seiten (12) des Handhabeelements (14) in dem ersten Führungskanal (6) schiebbar sind,
und, dass sie weiterhin aufweist:
- ein Paar von Stangen (18), die unten mit den Rädern (20) versehen sind und in den zweiten Führungskanälen (8) schiebbar sind, und
- Mittel (22, 28), um die parallelen Seiten (12) des Handhabeelements (14) und die Stangen (18) entlang ihrer jeweiligen Führungskanäle (6, 8) gleichzeitig und gegeneinander bewegen zu können.

2. Tragevorrichtung nach Anspruch 1 dadurch gekennzeichnet, dass der Tragrahmen (2) im wesentlichen U-Form mit einem niedrigeren Querteil (10), das die beiden in Längsrichtung verlaufenden Ständer (4) verbindet, besitzt.

3. Tragevorrichtung nach Anspruch 1 dadurch gekennzeichnet, dass es für jeden in Längsrichtung verlaufenden Ständer (4) ein Abdeckelement für die Führungskanäle (6, 8) aufweist.

4. Tragevorrichtung nach Anspruch 1 dadurch gekennzeichnet, dass jeder in Längsrichtung verlaufende Ständer (4) ein im wesentlichen nicht dehnbares endloses flexibles Element (22) aufnimmt, das an der entsprechenden Seite (12) des Handhabeelements (14) und an der entsprechenden Stange (18) angebracht ist, um deren entgegengesetzte axiale Bewegung zu synchronisieren.

5. Tragevorrichtung nach Anspruch 4 dadurch gekennzeichnet, dass das flexible Element (22) um ein Paar von Rollen (24) verläuft.

6. Tragevorrichtung nach Anspruch 1 dadurch gekennzeichnet, dass die Stangen (18) miteinander durch eine Verstärkungsstange verbunden sind.

7. Tragevorrichtung nach Anspruch 1 dadurch gekennzeichnet, dass an dem unteren Ende von jedem Ständer (4) ein Gehäusekörper (32) vorgesehen ist, der die Räder (20) in eingezogenem Zustand aufnimmt.

8. Tragevorrichtung nach Anspruch 1 dadurch gekennzeichnet, dass an jedem in Längsrichtung verlaufenden Ständer (4) ein Ritzel (28) angebracht ist, das teilweise in beide Führungskanäle (6, 8) hinein steht und gleichzeitig in gezahnte Bereiche (30) eingreift, die an der entsprechenden Seite (12) des Handhabeelements (14) und auf der entsprechenden Stange (18) vorgesehen sind, um deren entgegengesetzte axiale Bewegung zu synchronisieren.

9. Tragevorrichtung nach Anspruch 1 dadurch gekennzeichnet, dass zumindest ein Teil der Oberfläche jeder Seite (12) des Handhabeelements (14) und der Stange (18) und/oder zumindest ein Teil der Oberfläche von jedem Führungskanal (6, 8) behandelt sind, um die gegenseitige Gleitreibung zu erhöhen.

10. Tragevorrichtung nach Anspruch 1 dadurch gekennzeichnet, dass die äussere seitliche Wand von jedem Führungskanal (6) eine Verzahnung (32) zum Eingriff mit der spitz zulaufenden, entsprechenden Seite (12) des Handhabeelements (14) aufweist.

11. Tragevorrichtung nach Anspruch 1 dadurch gekennzeichnet, dass das Gesamtgewicht des Handhabeelements (14) größer ist als das Gesamtgewicht der beiden Stangen (18) mit ihren jeweiligen Rädern (20).

## Revendications

1. Un dispositif de support à usage multiple avec une poignée escamotable et des roues rétractables (20), comprenant en combinaison :
- un châssis de support (2) avec une paire de montants longitudinaux (4),
- un élément de poignée (14), avec deux côtés parallèles (12) coulissant à l'intérieur des montants (4) et un côté transversal de liaison (16) formant un élément de prise,
caractérisé en ce que :
- chaque montant comprend des premier et second canaux de guidage (6,8) s'étendant parallèlement l'un à l'autre et côte à côte,
- les côtés parallèles (12) de l'élément de poignée (14) sont coulissants à l'intérieur dudit premier canal de guidage (6),
et en ce qu'il comprend de plus :
- une paire de tiges (18) pourvues en partie inférieure des roues (20) et coulissant dans lesdits seconds canaux de guidage (8), et
- des moyens (22, 28) pour déplacer simultanément et à l'opposé les uns des autres lesdits côtés parallèles (12) de l'élément de poignée (14) et lesdites tiges (18) le long de leurs canaux de guidage respectifs (6, 8).

2. Un dispositif de support comme revendiqué en revendication 1, caractérisé en ce que le châssis de support (2) est essentiellement en forme de U avec un élément transversal inférieur (10) réunissant ensemble les deux montants longitudinaux (4).

3. Un dispositif de support comme revendiqué en revendication 1, caractérisé en ce qu'il comprend pour chaque montant longitudinal (4) un élément de recouvrement des canaux de guidage (6, 8).

4. Un dispositif de support comme revendiqué en revendication 1, caractérisé en ce que chaque montant longitudinal (4) contient un élément flexible (22) sans fin sensiblement non-extensible fixé au côté correspondant (12) de l'élément de poignée (14) et à la tige correspondante (18) pour synchroniser leurs mouvements axiaux opposés.

5. Un dispositif de support comme revendiqué en revendication 4, caractérisé en ce que l'élément flexible (22) passe à travers une paire de rouleaux (24).

6. Un dispositif de support comme revendiqué en revendication 1, caractérisé en ce que les tiges (18) sont reliées l'une à l'autre au moyen d'une barre de renforcement.

7. Un dispositif de support comme revendiqué en revendication 1, caractérisé en ce que l'extrémité inférieure de chaque montant (4) est équipée d'un corps en coquille (32) de logement des roues (20) à l'état rétracté du dispositif.

8. Un dispositif de support comme revendiqué en revendication 1, caractérisé en ce que sur chaque montant longitudinal (4) est monté un pignon (28) s'étendant en partie à l'intérieur des deux canaux de guidage (6, 8) et engageant simultanément des parties dentées (30) prévues sur le côté correspondant (12) de l'élément de poignée (14) et sur la tige correspondante (18) pour synchroniser leurs mouvements axiaux opposés.

9. Un dispositif de support comme revendiqué en revendication 1, caractérisé en ce qu'au moins une partie de la surface de chaque côté (12) de l'élément de poignée (14) et de chaque tige (18) et/ou au moins une partie de la surface de chaque canal de guidage (6, 8) sont traitées pour augmenter leur frottement mutuel en glissement.

10. Un dispositif de support comme revendiqué en revendication 1, caractérisé en ce que la paroi latérale extérieure de chaque canal de guidage (6) comprend une denture (32) pour venir en prise avec la pointe du côté correspondant (12) de l'élément de poignée (14).

11. Un dispositif de support comme revendiqué en revendication 1, caractérisé en ce que le poids total de l'élément de poignée (14) est supérieur au poids total des deux tiges (18) et de leurs roues respectives (20).
